# Europäisches Patentamt

# European Patent Office

# Office européen des brevets

(11) Veröffentlichungsnummer: **0 264 703**
**B1**

(12) **EUROPÄISCHE PATENTSCHRIFT**

(45) Veröffentlichungstag der Patentschrift:
28.03.90

(21) Anmeldenummer: 87114522.3

(22) Anmeldetag: 05.10.87

(51) Int. Cl.⁴: **B01D 29/50, B01D 37/02**

(54) **Anschwemmfilter.**

(30) Priorität: 13.10.86 DE 3634870

(43) Veröffentlichungstag der Anmeldung:
27.04.88 Patentblatt 88/17

(45) Bekanntmachung des Hinweises auf die Patenterteilung:
28.03.90 Patentblatt 90/13

(84) Benannte Vertragsstaaten:
CH DE IT LI SE

(56) Entgegenhaltungen:
EP-A- 0 098 643
DE-A- 1 812 520
DE-B- 1 097 409
FR-A- 828 775
US-A- 2 737 299
US-A- 3 438 502

(73) Patentinhaber: **Siemens Aktiengesellschaft,
Wittelsbacherplatz 2, D-8000 München 2(DE)**
Patentinhaber: **Consulectra Unternehmensberatungs
GmbH, Flotowstrasse 41-43, D-2000 Hamburg 76(DE)**

(72) Erfinder: **Fahje, Henry, Stresemannstrasse 23,
D-6457 Maintal 1(DE)**
Erfinder: **Neumann, Peter, Dipl.-Ing., Holbeinstrasse 43,
D-6000 Frankfurt 70(DE)**
Erfinder: **Kleen, Uwe, Dr., Riesdahlstrasse 32,
D-2054 Geesthacht(DE)**

(74) Vertreter: **Fuchs, Franz-Josef, Dr.-Ing. et al,
Postfach 22 13 17, D-8000 München 22(DE)**

**Beschreibung**

Die Erfindung liegt auf dem Gebiet der Anschwemmfilter, deren Filterelemente aus einem innen hohlen durchlässigen Stützkörper mit darauf angeordnetem Filterkörper als Träger für eine äußere Anschwemmschicht bestehen.

Es sind Anschwemmfilter zur Reinigung eines flüssigen Mediums von mechanischen und/oder ionalen Inhaltsstoffen bokannt, bei denen in einem Behälter eine Vielzahl von zylinderförmigen Filterelementen angeordnet sind. Der Behälter besitzt an einer Seite eine Eintrittsöffnung und an derselben oder einer entgegengesetzten Seite eine Austrittsöffnung für das zu filternde Medium. Im Bereich des Mediumeintritts sind bei den herkömmlichen Filtern umfangreiche und platzraubende Verteil- und Leiteinrichtungen angeordnet, welche die Eintrittsströmung des Mediums über den Anschwemmfilterquerschnitt verteilen und richten, um zu erreichen, daß je nach Konstruktion des Anschwemmfilters eine annähernd gleichmäßige Auf- bzw. Abwärtsgeschwindigkeit im Bereich der Enden der Filterelemente erzielt wird.

Die mechanischen und/oder ionalen Inhaltsstoffe werden in der Anschwemmschicht festgehalten, die nach Erschöpfung durch Umkehrung der Strömungsrichtung rückgespült und durch eine neue Anschwemmschicht ersetzt wird.

Die Abfallmenge des entstehenden Anschwemmaterials wird vornehmlich von der Filterstandzeit bestimmt. Um die Abfallmenge des Anschwemmaterials klein zu halten, ist man deshalb bestrebt, möglichst große Standzeiten zu erzielen. Dies kann erreicht werden, indem man niedrige Filtergeschwindigkeiten wählt.

Bei der Wahl hoher Filtergeschwindigkeiten ergeben sich Abtragungen, die eine Verkleinerung der Standzeiten mit sich bringen und sobald das Filterelement an einigen Stellen von der Anschwemmschicht freigelegt worden ist, eine Verschmutzung des beispielsweise aus einem Garnwickel oder Siebgewebe bestehenden Filterkörpers. Bei hohen Mediumgeschwindigkeiten ergeben sich ferner unregelmäßige Schichtdicken an dem mit einer Abschlußkappe versehenen Filterelementende, das vom Medium angeströmt wird. Um die turbulente Strömung zu vergleichmäßigen bzw. zu beruhigen, braucht man einen relativ großen Abstand zwischen der Einströmöffnung des Behälters und der Anströmfläche der Filterelemente.

Der Erfindung liegt die Aufgabe zugrunde, unter Vermeidung der Nachteile der bekannten Anschwemmfilter die Standzeiten mit einfachen Mitteln zu erhöhen.

Diese Aufgabe wird erfindungsgemäß durch ein Anschwemmfilter zur Reinigung eines flüssigen Mediums von mechanischen und/oder ionalen Inhaltsstoffen gelöst, bei dem in einem Behälter eine Vielzahl von zylinderförmigen Filterelementen angeordnet ist, die aus einem innen hohlen, durchlässigen Stützkörper mit darauf angeordnetem Filterkörper als Träger für eine äußere Anschwemmschicht bestehen, wobei an der Mediumeintrittsseite, an der die Filterelemente mittels einer Verschlußkappe an einer Halterung befestigt sind, Leiteinrichtungen zum Verzögern und Vergleichmäßigen der Mediumgeschwindigkeit vorgesehen sind und die Verschlußkappen der Filterelemente durch zumindest annähernd zylinderförmige Strömungskörper gebildet sind, die an der Anschlußseite der Anschwemmschicht den gleichen Außendurchmesser besitzen wie der Außendurchmesser der Anschwemmschicht und an der angeströmten Seite kontinuierlich in eine bogenförmig nach außen gewölbte rotationssymmetrische Strömungsform übergehen.

Auf diese Weise werden die Filterelemente beim Anschwemmvorgang gleichmäßiger belegt, wobei die gleichmäßige Belegung auch bei höheren Filtergeschwindigkeiten erhalten bleibt, so daß die Filter mit höheren Mediumgeschwindigkeiten gefahren und damit die Leistung des Filters erhöht werden kann. Die höheren Filtergeschwindigkeiten ermöglichen es, die Filter kleiner zu bauen.

Darüberhinaus ist durch die erfindungsgemäße Ausbildung eine Verkürzung der Filterei nlaufstrecke und damit eine weitere Verkleinerung des gesamten Filters oder bei gleichen Filterabmessungen eine Vergrößerung der aktiven Filterfläche möglich. Damit können die Standzeiten der Filter erheblich erhöht werden. Daraus ergibt sich die Möglichkeit, im konventionellen Anschwemmfilter-Verfahren eine Verkleinerung der Filter vorzunehmen, um den Platzbedarf zu reduzieren oder in Nuklearanlagen die Filteranschwemmittel und den daraus resultierenden radioaktiven Abfall zu reduzieren.

Vorteilhafte Ausgestaltungen der Erfindung sind in den Unteransprüchen angegeben.

Die Erfindung wird anhand von Ausführungsbeispielen näher erläutert. Darin zeigen:

Fig. 1 einen Anschwemmfilter für eine Kondensatreinigung in einem Kernkraftwerk mit Siedewasserreaktor,

Fig. 2 einen Schnitt durch den Anschwemmfilter gemäß Fig. 1,

Fig. 3 einen vergrößerten Schnitt durch ein Filterelement,

Fig. 4 einen Strömungskörper eines Filterelementes und

Fig. 5 eine andere Oberflächengestaltung eines Strömungskörpers.

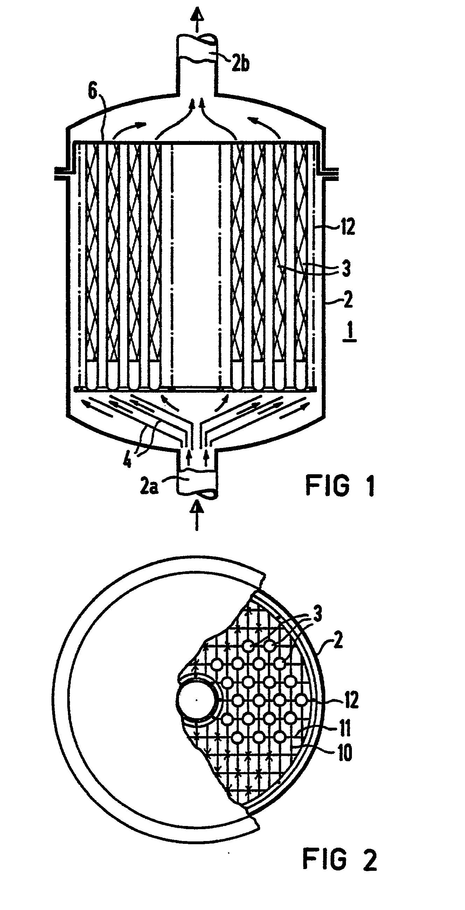

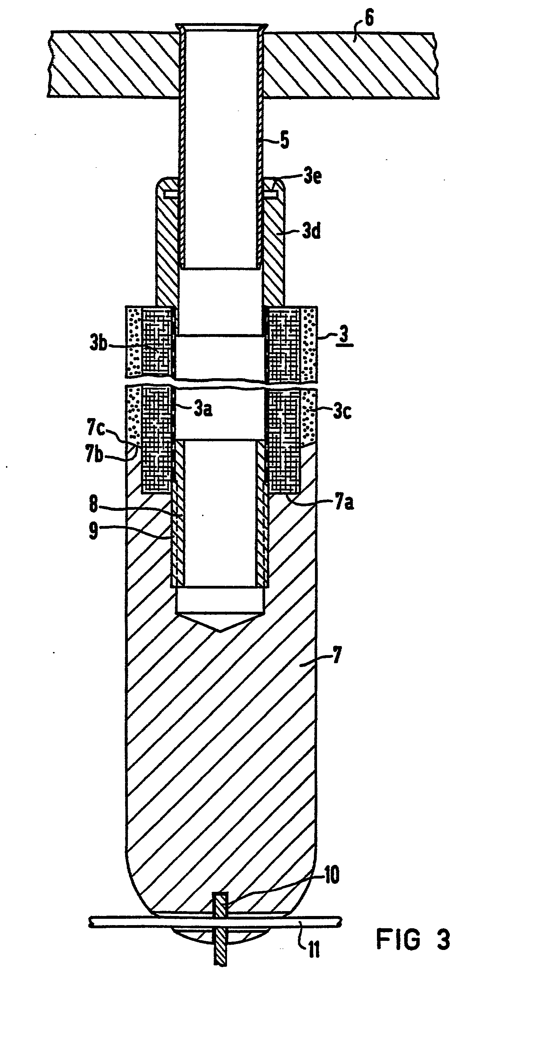

In Fig. 1 ist mit 1 ein Anschwemmfilter zur Reinigung eines flüssigen Mediums bezeichnet, bei dem in einem zylindrischen Behälter 2, der unten eine Eintrittsöffnung 2a und oben eine Austrittsöffnung 2b für das flüssige Medium eines Wasser-Dampfkreislaufes eines Siedewasserreaktors besitzt. Im Behäl ter befinden sich achsparallele zylindrische Filterelemente 3 (Fig. 2). Jedes Filterelement besteht aus einem inneren, durchlässigen hohlen Stützkörper 3a, z.B. aus einem gelochten Rohr oder Gitter, mit darauf angeordnetem Filterkörper 3b, beispielsweise aus Garnwickel oder Siebgewebe aus Naturfaser, Kunststoff oder Metall,der als Träger für eine äußere Anschwemmschicht 3c dient (Fig. 3).

Die Filterelemente haben zu ihrer Befestigung am oberen Ende ein zylinderförmiges Kopfstück 3d, das mit Hilfe eines Dichtrings 3e einen Rohrstutzen 5 dicht umschließt, der wiederum in eine im oberen Teil des Behälters 2 angeordnete Filterelementplatte 6 mündet und dort befestigt ist. Durch diesen Rohrstutzen 5 gelangt das gereinigte Medium in den oberen Teil des Behälters 2.

Das untere Ende des Filterelementes 3 trägt eine Verschlußkappe, die durch einen zumindest annähernd zylinderförmigen Strömungskörper 7 gebildet wird, die an der Anschlußseite der Anschwemmschicht 3c den gleichen Außendurchmesser besitzt wie der Außendurchmesser der Anschwemmschicht 3c und an der angeströmten Seite kontinuierlich in eine bogenförmig nach außen gewölbte rotationssymmetrische Strömungsform übergeht.

Der innere hohle Stützkörper 3a trägt am unteren Ende ein Befestigungsmittel, über das der Strömungskörper 7 befestigt ist. Als Befestigungsmittel dient ein rohrförmiges Zwischenstück 8 mit Außengewinde 9, das auf einfache Weise die Herstellung einer Schraubverbindung erlaubt. Das Filterelement 3 ist über den mit einem Schlitz versehenen Strömungskörper 7 an einem hochkant angeordneten Flachstab 10 abgestützt und durch einen in eine Öffnung des Strömungskörpers 7 und des Stabes 10 hindurchgesteckten Rundstab 11 gesichert, wobei die Rundstäbe 11 und die Flachstäbe 10 an einem Befestigungsgitter angebracht sind (Fig. 2).

Das Befestigungsgitter ist über Zuganker 12 mit der Filterelementplatte 6 verbunden, so daß eine aus dem Behälter 1 herausnehmbare Filterelementeinheit gebildet wird (Fig. 1).

Zum Verzögern und Vergleichmäßigen der Mediumgeschwindigkeit sind an der Eintrittsöffnung des Mediums Leiteinrichtungen 4 in Form von trichterförmig verteilten Leitblechen vorgesehen.

Es ist günstig, wenn der Strömungskörper 7 die Gestalt eines Zylinders hat, dessen Anströmseite nach Art einer Kalotte, insbesondere Halbkugel, ausgebildet ist (Fig. 3).

Um bei hohen Mediumgeschwindigkeiten an der Anschlußstelle des Strömungskörpers 7 Wirbelbildungen zu vermeiden und ein besonderes gleichmäßiges Auftragen der Anschwemmschicht 3c zu erreichen ist es vorteilhaft, die Anschlußfläche des Strömungskörpers 7 an die aufzutragende Anschwemmschicht 3c als eine nach innen konische Fläche 7b unter Bildung einer scharfen Abrißkante 7c für die Strömung auszubilden.

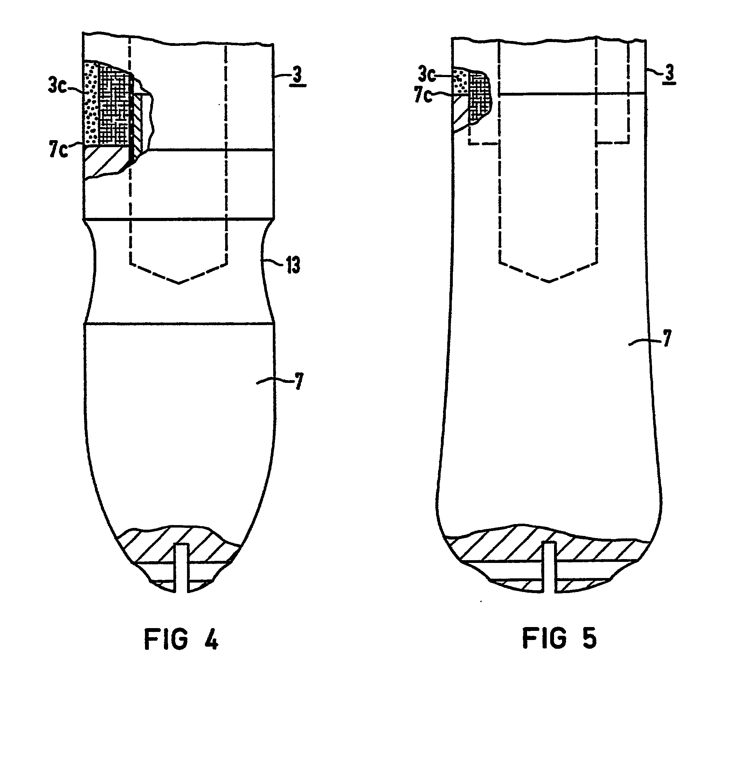

Bei Verwendung einer anderen Ausbildung der Anschlußfläche des Strömungskörpers 7 an die Anschwemmschicht, beispielsweise bei einer 90°- oder abgerundeten Abrißkante kann eine gleichmäßige Schichtdicke auch dadurch erzielt werden, daß nahe der Übergangsstelle des Strömungskörpers 7 zur Anschwemmschicht 3c im Strömungskörper 7 eine rotationssymmetrische Einschnürung 13 vorgesehen ist (Fig. 4). Diese Einschnürung wird zweckmäßigerweise in einem Abstand von etwa einem Drittel der Länge des Strömungskörpers 7 von der Anschwemmschicht 3c angeordnet. Dabei ist es günstig, der Einschnürung 13 die Form eines Hyperpoloids zu geben.

Eine einfache Abdichtung und Befestigung des Strömungskörpers 7 läßt sich dadurch erreichen, daß er an der Anschlußseite zu der Anschwemmschicht 3c mit einer zentrischen ringförmigen Aussparung 7a versehen wird. Dabei kann das rohrförmige Zwischenstück 8 in das innere Stützrohr 3a ragend mit der Abrißkante 7c bündig abschließend befestigt sein. Diese Ausführung erlaubt zusätzlich zu einer guten Abdichtung einen Ausgleich von Fertigungs-Längentoleranzen der Filterelemente.

Ein besonders günstiges Anströmprofil wird erreicht, wenn der Strömungskörper 7 die Gestalt eines Tropfens hat, wie dies in Fig. 5 gezeigt ist.

Günstige Ergebnisse beim Aufbringen der Anschwemmschicht 3c lassen sich auch durch einen Strömungskörper 7 erzielen, der die Gestalt eines Zylinders hat, dessen Anströmseite nach Art eines Paraboloids mit kreisförmiger Grundfläche ausgebildet ist (Fig. 4).

**Patentansprüche**

1. Anschwemmfilter zur Reinigung eines flüssigen Mediums von mechanischen und/oder ionalen Inhaltsstoffen, bei dem in einem Behälter (2) eine Vielzahl von zylinderförmigen Filterelementen (3) angeordnet sind, die aus einem innen hohlen, durchlässigen Stützkörper (3a) und einem darauf angeordnetem Filterkörper (3b) als Träger für eine äußere Anschwemmschicht (3c) bestehen, wobei an der Mediumeintrittsseite, an der die Filterelemente (3) mittels Verschlußkappen an einer Halterung befestigt sind, Leiteinrichtungen (4) zum Verzögern und Vergleichmäßigen der Mediumgeschwindigkeit vorgesehen sind und die Verschlußkappen der Filterelemente (3) durch zumindest annähernd zylinderförmige Strömungskörper (7) gebildet sind, die an der Anschlußseite der Anschwemmschicht (3c) den gleichen Außendurchmesser besitzen wie der Außendurchmesser der Anschwemmschicht (3c) und an der angeströmten Seite kontinuierlich in eine bogenförmig nach außen gewölbte rotationssymmetrische Strömungsform übergehen.

2. Filter nach Anspruch 1, bei dem der Strömungskörper (7) die Gestalt eines Zylinders hat, dessen Anströmseite nach Art einer Kalotte, insbesondere Halbkugel, ausgebildet ist.

3. Filter nach Anspruch 1 oder 2, bei dem die Anschlußfläche des Strömungskörpers (7) an die aufzutragende Anschwemmschicht (3c) als eine nach innen konische Fläche (7b) unter Bildung einer scharfen Abrißkante (7c) für die Strömung beim Aufbringen der Anschwemmschicht (3c) ausgebildet ist.

4. Filter nach einem der vorhergehenden Ansprüche, bei dem nahe der Übergangsstelle des Strömungskörpers (7) zur Anschwemmschicht (3c), insbesondere in einem Abstand von etwa einem Drittel der Länge des Strömungskörpers (7), im Strömungskörper (7) eine rotationssymmetrische Einschnürung (13) vorgesehen ist.

5. Filter nach Anspruch 4, bei dem die Einschnürung (13) die Form eines Hyperboloids hat.

6. Filter nach einem der vorhergehenden Ansprüche, bei dem der Strömungskörper (7) an der Anschlußseite zu der Anschwemmschicht (3c) eine zentrische ringförmige Aussparung (7a) besitzt, in die der zylinderförmige Stützkörper (3a) und der Filterkörper (3b) hineinragen.

7. Filter nach einem der Ansprüche 1 oder 3 bis 6, bei dem der Strömungskörper (7) die Gestalt eines Tropfens hat.

8. Filter nach einem der Ansprüche 1 oder 3 bis 6, bei dem der Strömungskörper (7) die Gestalt eines Zylinders hat, dessen Anströmseite nach Art eines Paraboloids mit kreisförmiger Grundfläche ausgebildet ist.

## Claims

1. Alluvial filter for cleaning a liquid medium of mechanical and/or ionic components, where there is arranged in a container (2) a plurality of cylindrical filter elements (3), which consist of supporting body (3a), hollow inside and permeable, and a filter body (3b) arranged thereon as carrier for an outer alluvial layer (3c), whereby on the entry side of the medium, on which the filter elements (3) are fastened by means of locking caps on a holder, conduction apparatus (4) are provided for slowing down and evening out the speed of the medium and the locking caps of the filter elements (3) are formed by current bodies (7), which are at least approximately cylindrical and which possess on the connection side of the alluvial layer (3c) the same outer diameter as the outer diameter of the alluvial layer (3c) and on the side which is flowed against pass over continuously into a curved, rotationally symmetrical current shape which is externally arched.

2. Filter according to claim 1, where the current body (7) has the form of a cylinder, of which the side which is flowed against is constructed like a hemispherical object, more particularly a hemisphere.

3. Filter according to claim 1 or 2, where the connection surface of the current body (7) is constructed on the alluvial layer (3c), which is to be carried, as an inwardly conical surface (7b), with the formation of a sharp edge (7c) for the current with the application of the alluvial layer (3c).

4. Filter according to one of the preceding claims, where near the transition point of the current body (7) to the alluvial layer (3c), more particularly in a space of about one third of the length of the current body (7), there is provided in the current body (7) a rotationally symmetrical constriction (13).

5. Filter according to claim 4, where the constriction (13) has the shape of a hyperboloid.

6. Filter according to one of the preceding claims, where on the connection side to the alluvial layer (3c) the current body (7) possesses a central, annular cutout (7a), into which the cylindrical supporting body (3a) and the filter body (3b) project.

7. Filter according to one of claims 1 or 3 to 6, where the current body (7) has the form of a drop.

8. Filter according to one of claims 1 or 3 to 6, where the current body (7) has the form of a cylinder, of which the side which is flowed against is constructed like a paraboloid with circular base.

## Revendications

1. Filtre à couches pour débarrasser un milieu liquide de substances mécaniques et/ou ioniques qu'il contient, comprenant un récipient (2) dans lequel sont disposés un grand nombre d'éléments filtrants (3) de forme cylindrique, qui sont constitués d'une pièce de support (3a) perméable et intérieurement creuse et d'un corps filtrant (3b) disposé sur celle-ci en tant que support pour une couche externe déposée (3c), avec prévision, du côté de l'entrée du fluide, où les éléments filtrants (3) sont fixés au moyen d'embouts de fermeture à une structure porteuse, de déflecteurs (4) pour ralentir et uniformiser la vitesse du fluide, les embouts de fermeture des éléments filtrants (3) étant constitués par des pièces effilées (7), ayant une forme au moins approximativement cylindrique, qui possède, du côté où se raccorde la couche déposée (3c), le même diamètre extérieur que le diamètre extérieur (2) de la couche déposée (3) et passent de façon continue, du côté de l'arrivée de l'écoulement, à une forme effilée courbe, bombée vers l'extérieur et à symétrie de révolution.

2. Filtre selon la revendication 1, dans lequel la pièce effilée (7) affecte la forme d'un cylindre dont le côté arrivée de l'écoulement est réalisé à la façon d'une calotte, en particulier d'un hémisphère.

3. Filtre selon la revendication 1 ou 2, dans lequel la surface par laquelle la pièce effilée (7) se raccorde à la couche (3c) à appliquer, est conformée comme une surface intérieure conique (7b), avec formation d'une arête vive (7c) de décollement, pour l'écoulement lors de l'application de la couche (3c).

4. Filtre selon une des revendications précédentes, dans lequel un rétrécissement (13) à symétrie de révolution est prévu dans la pièce effilée (7) près du point de transition entre la pièce effilée (7) et la couche déposée (3c), en particulier à une distance correspondant à peu près à un tiers de la longueur de la pièce effilée (7).

5. Filtre selon la revendication 3, dans lequel le rétrécissement (13) a la forme d'un hyperboloïde.

6. Filtre selon l'une des revendications précédentes, dans lequel la pièce effilée (7) possède, du côté où elle se raccorde à la couche déposée (3c), un évidement annulaire centré (7a), dans lequel pénètrent la pièce de support cylindrique (3a) et le corps filtrant (3b).

7. Filtre selon une des revendications 1 ou 3 à 6, dans lequel la pièce effilée (7) a la forme d'une goutte.

8. Filtre selon une des revendications 1 ou 3 à 6, dans lequel la pièce effilée (7) a la forme d'un cylindre dont le côté arrivée de l'écoulement est réalisé à la façon d'un paraboloïde ayant une surface de base circulaire.

FIG 1

FIG 2

FIG 3

FIG 4

FIG 5